# EUROPEAN PATENT SPECIFICATION

(11) **EP 2 343 512 B1**
(45) Date of publication and mention of the grant of the patent: **06.06.2018**
(21) Application number: 10195283.6
(22) Date of filing: 16.12.2010
(51) Int. Cl.: G01D 7/00

(54) **Methods and Apparatuses for Computation and Display of Equipment Operational Data**
Verfahren und Vorrichtungen zur Berechnung und Anzeige von Gerätebetriebsdaten
Procédés et appareils de calcul et d'affichage de données opérationnelles d'équipement

(30) Priority: 22.12.2009 US 644771
(43) Date of publication of application: 13.07.2011
(73) Proprietor: Schneider Electric USA, Inc., Schaumburg, IL 60173 (US)
(72) Inventor: COLBY, Roy S., Raleigh, NC 27615 (US)
(74) Representative: Grünecker Patent- und Rechtsanwälte PartG mbB

(56) References cited:
- US-A- 4 858 141
- US-A1- 2008 224 892
- US-A1- 2009 195 349

## Description

### FIELD OF THE INVENTION

The present disclosure relates generally to the display of equipment operational data and, in particular, to methods for graphic display of power consumed or produced by various pieces of electrical equipment during an on-state.

### BACKGROUND

Much can be learned about the condition of electrical equipment by examining patterns of operation and amounts of energy use from such equipment. For example, electric utilities require information concerning the electric consumption of typical appliances for use in load forecasting and for planning future generation and transmission capacity. Public policy makers also require such information for their guidance in rate setting and reviewing capacity expansion plans. A graphical display that presents information such as power consumption can be a valuable aid to a system operator or a troubleshooter. Such information is desirable especially in systems that include multiple pieces of equipment, which may have different on and off times. The document US 4 858 141 A describes a system for determining and displaying characteristics of power associated with pieces of electrical equipment that can be switched on and off independently. This system comprises a data interface connected to current sensing transformers adapted to couple to the electrical devices in order to measure the current consumed by the electrical devices, a controller capable of calculating characteristics of power as well as on- and off-times from the measured data, and an output unit to which a display can be connected.

Presently, measured power data from equipment may be displayed on a graph to show comparable power consumption. Such a graph may show the power for different pieces of related equipment in an ensemble of electrical equipment. An ensemble of equipment may therefore have a number of operating modes where the pieces of equipment are in various on or off states. For example, an equipment system with four separate compressors may have sixteen operating modes, each operating mode describing a unique combination of the on or off states of the four separate compressors. A second graph is required to show the times that a piece of electrical equipment within the ensemble is turned on or off. The different graphical displays are cumbersome to use because a person performing analysis of the equipment ensemble must look between the two graphs to interpret the mode, time, and power data for the different pieces of equipment.

Thus, it is desirable to provide an efficient graphical display that provides time and energy operating characteristics of electrically powered equipment. There is also a desire to have a graphical display that shows power data for various operating modes of equipment ensembles. It is also desirable to provide a graphical display that separates out graphical indicators to distinguish between different operating modes of the equipment ensemble.

### BRIEF SUMMARY

The first of the objects mentioned above is achieved by the method as defined in claim 1 and by the system as defined in claim 10.

One example disclosed is a method of displaying a characteristic of power associated with a first piece of electrical equipment that has an on-state and an off-state. A measurement of a current consumed or produced by the first piece of electrical equipment in the on-state is received. First data derived from the measured current and associated times when the first piece of electrical equipment is in the on-state is stored on a memory device. A characteristic of power is calculated as a function of the first data. A graphical representation of the characteristic of power as a multi-dimensional shape is displayed on a graph on a video display device. The graph has a first axis with time increments and a second axis with increments representing units of the characteristic of power. The multi-dimensional shape includes a first dimension representing a duration of the on-state and a second dimension representing the characteristic of power consumed or produced by at least the first piece of electrical equipment during the times associated with the duration of the on-state.

Another example disclosed is a system for displaying a characteristic of power consumed or produced by an ensemble of electrical equipment. The ensemble of electrical equipment includes a first electrical device having an on state and an off state and a second electrical device having an on state and an off state. The ensemble of electrical equipment has a plurality of distinct operating modes that are a function of the on and off states of at least the first and second electrical devices. A data interface for coupling to the first and second electrical devices to measure current consumed or produced by the first and second electrical devices is provided. A storage device is coupled to the data interface to store (a) data derived from the current measured from the first and second electrical devices and (b) associated times. A controller is coupled to the storage device. The controller calculates a characteristic of power from the data and the associated times. A display displays the data as a multi-dimensional shape on a graph having a first axis with time increments and a second axis with increments representing units of the characteristic of power. The multi-dimensional shape includes a first dimension representing the duration of a first operating mode and a second dimension representing a characteristic of power consumed or produced by those of the electrical devices that are in the on state during the first operating mode.

Another example disclosed is a display device for displaying a characteristic of power consumed or produced by a first piece of electrical equipment, having an on-state and an off-state, via an interface coupled to the electrical equipment. Data derived from measured current consumed or produced by the first piece of electrical equipment is stored in a memory device and is used to calculate a characteristic of power over associated times. The display device includes a graphic that displays the data as a multi-dimensional shape on a graph having a first axis with time increments and a second axis with increments representing units of the characteristic of power. The multi-dimensional shape includes a first dimension representing the duration of the on-state and a second dimension representing a value relating to the characteristic of power consumed or produced by at least the first piece of electrical equipment during the on-state.

Additional aspects will be apparent to those of ordinary skill in the art in view of the detailed description of various embodiments, which is made with reference to the drawings, a brief description of which is provided below.

### BRIEF DESCRIPTION OF THE DRAWINGS

The foregoing and other advantages of the invention will become apparent upon reading the following detailed description and upon reference to the drawings.
FIG. 1 is a block diagram of a display system for displaying power and time data for an equipment ensemble system according to some aspects of the implementations;
FIG. 2 is a block diagram of the power monitor unit of the display system in FIG. 1;
FIG. 3 is an exemplary screen shot of a graphic shown on the display system in FIG. 1 including multi-dimensional bars representing a characteristic of power associated with different operating modes of the equipment ensemble in FIG. 1; and
FIG. 4A is a flowchart diagram of an exemplary process of computing data for a data record by the power monitor unit of FIGs. 1-2; and
FIG. 4B is a flowchart diagram of an exemplary process of graphically displaying power consumed or produced by the equipment ensemble in FIG. 1.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the scope of the invention as defined by the appended claims.

### DETAILED DESCRIPTION

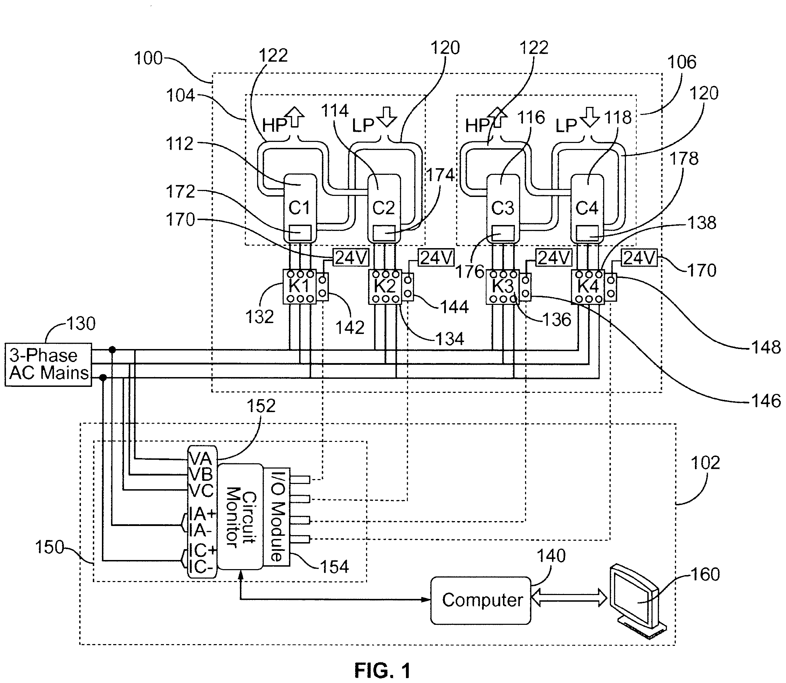

Referring to FIG. 1, an equipment ensemble system 100 such as a chiller is shown with a power monitoring and display system 102. In this example, the chiller 100 includes various pieces of electrical equipment or devices that are organized in one of two refrigerant circuits 104 and 106. Each of the refrigerant circuits 104 and 106 includes two pieces of electrical equipment or devices such as compressors 112, 114, 116, and 118 respectively. The compressors 112, 114, 116, and 118 are coupled to low pressure conduits 120 and high pressure conduits 122. Refrigerant gas at low pressure is fed to the compressors 112, 114, 116, and 118 via the low pressure conduits 120 and discharged at high pressure to the high pressure conduits 122. In this example, refrigerant gas is compressed by the compressors 112, 114, 116, and 118 and output through the high pressure conduits 122. The compressors 112, 114, 116, and 118, the low pressure conduits 120, and the high pressure conduits 122 make up a refrigerant loop that transfers heat between a chilled water circuit and an outside air heat exchanger (not shown in FIG. 1). Together, the compressors 112, 114, 116, 118 form an ensemble of equipment. A "piece" of electrical equipment or an electrical device refers to an electrical apparatus having an on-state in which power is supplied to the apparatus and an off-state in which no power is received by the apparatus. Each piece of electrical equipment has its own on- and off-states independent of corresponding on- and off-states of other pieces of electrical equipment in the ensemble of equipment.

In this example, the chiller 100 has different operating modes in which one, two, three, or all of the compressors 112, 114, 116, and 118 are in an on-state. Each of the operating modes therefore requires different amounts of power and can be active for a certain duration of time. An operating mode instance corresponds to a period of time during which the states (on or off) of the compressors 112, 114, 116, and 118 do not change. Once any one of the compressor states changes, a new instance of a different operating mode is invoked. Table 1 below shows the on or off state of the compressors 112, 114, 116, and 118 (1 designating an on-state and 0 designating an off-state) and the operating mode identifier ("Mode ID") associated with the distinct operating modes of the chiller 100. Each operating mode identifier (Mode ID) corresponds to a distinct operating mode. Note that for four pieces of equipment and two states, there are 2⁴ or 16 possible distinct operating modes or Mode IDs.

**TABLE 1: Compressor States and Operating Modes**

| Compressor 112 | Compressor 114 | Compressor 116 | Compressor 118 | Mode ID |
|---|---|---|---|---|
| 0 | 0 | 0 | 0 | 0 |
| 0 | 0 | 0 | 1 | 1 |
| 0 | 0 | 1 | 0 | 2 |
| 0 | 0 | 1 | 1 | 3 |
| 0 | 1 | 0 | 0 | 4 |
| 0 | 1 | 0 | 1 | 5 |
| 0 | 1 | 1 | 0 | 6 |
| 0 | 1 | 1 | 1 | 7 |
| 1 | 0 | 0 | 0 | 8 |
| 1 | 0 | 0 | 1 | 9 |
| 1 | 0 | 1 | 0 | 10 |
| 1 | 0 | 1 | 1 | 11 |
| 1 | 1 | 0 | 0 | 12 |
| 1 | 1 | 0 | 1 | 13 |
| 1 | 1 | 1 | 0 | 14 |
| 1 | 1 | 1 | 1 | 15 |

Each of the compressors 112, 114, 116, and 118 includes respective motors 172, 174, 176, and 178 which, in turn, are coupled to the main AC power supply by respective motor contacts 132, 134, 136, and 138. The motor contacts 132, 134, 136, and 138 are each fitted with and mechanically linked to respective auxiliary contacts 142, 144, 146, and 148. When the motor contacts 132, 134, 136, and 138 are closed, by application of a control voltage (not shown), the mechanical linkage causes the respective auxiliary contact 142, 144, 146, and 148 to close as well. The auxiliary contacts 142, 144, 146, and 148 are used with an auxiliary voltage supply 180 to provide a discrete motor on/off status signal at the voltage level of the auxiliary voltage supply 180 for each of the compressor motors 172, 174, 176, and 178. In this example, the auxiliary voltage supply 180 is a 24-volt supply, but other voltages can be used.

The display system 102 includes a computer 140, a circuit monitor 150, and a display device 160, such as a video display. The circuit monitor 150 in this example is configured to measure the total power delivered to the chiller 100 based on the sampled voltage and current waveforms from inputs to a power input interface 152. In this example, the circuit monitor 150 receives a measurement of a current and voltage consumed or produced by the electrical equipment such as a first piece of electrical equipment (one of the compressors 112, 114, 116, or 118) in the on-state. The on and off states of the compressors 112, 114, 116, and 118 can be determined from inputs from the auxiliary contacts 142, 144, 146, and 148 that are coupled to an auxiliary input/output interface 154. The circuit monitor 150 can compute real and reactive power, real and reactive energy, average reactive power, average reactive energy, average power consumed or produced, peak current, average current, and other power-related characteristic quantities that are of interest from the chiller 100. The data of the power-related characteristic quantities are derived from at least the measured current from the compressors 112, 114, 116, and 118. As will be explained below, these and other power-related characteristic data could also be computed via the computer 140.

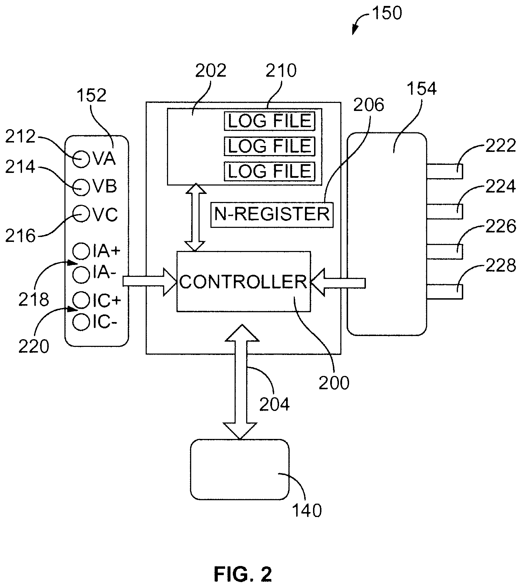

FIG. 2 is a block diagram of the circuit monitor 150 in FIG. 1. The circuit monitor 150 includes a controller 200, a data storage or memory device 202, a data interface 204, and a register 206. The data storage device 202 stores measured data (e.g., current, voltage, status register contents, and associated times) and computed or derived data (e.g., energy or power-related characteristics) to be recorded in data log files 210. The power input interface 152 includes three voltage inputs 212, 214, and 216 and two sets of current inputs 218 and 220 that are coupled to the main AC power supply 130 in FIG. 1. The circuit monitor 150 samples the voltage and current waveforms that are obtained via the power input interface 152 from the main AC power supply 130 and reads data reflecting the sampled waveforms.

In this example, the circuit monitor 150 can also monitor the state of discrete inputs for each of the compressors 112, 114, 116, and 118 by the auxiliary input/output module 154. The auxiliary input/output module 154 includes four input terminals 222, 224, 226, and 228 that are coupled to respective auxiliary contacts 142, 144, 146, and 148 in FIG. 1. When any one of the auxiliary contacts 142, 144, 146, and 148, are closed, corresponding to closing the respective motor contacts 132, 134, 136, and 138, a logical one is read from the respective input terminals 222, 224, 226, and 228 indicating that the respective motor contacts 132, 134, 136, or 138 are closed and that the motors 172, 174, 176, and 178 are powered and the respective compressors 112, 114, 116, and 118 in the on-state. When the motor contacts 132, 134, 136, or 138 are open (i.e., there is no power to the motors 172, 174, 176, and 178), an open circuit exists with the auxiliary contacts 142, 144, 146, and 148, and a logical zero is read from the respective input terminals 222, 224, 226, and 228, indicating that the respective compressors 112, 114, 116, and 118 are in the off-state.

The data output of the circuit monitor 150 is coupled to the computer 140 via the interface 204. In response to receiving the data output from the circuit monitor 150, the computer 140 can execute analysis software to perform further analysis of the data such as calculating a characteristic of power as a function of the stored data. The computer 140 includes a computer-readable tangible medium that includes machine-readable instructions to allow the computer to graphically display a characteristic of power consumed or produced by the chiller 100 on a video display such as the display device 160 in FIG. 1, as will be explained in more detail below.

Data is logged to the data log files 210 in the data storage device 202 of the circuit monitor 150 whenever there is a change in any of the motor status inputs detected through the auxiliary contacts 142, 144, 146, and 148. The recorded data is derived from the measured current and voltage from the power input interface 130 by the controller 200. The recorded data includes total accumulated energy since a reference time, total reactive energy since a reference time, the calendar date and time, and the logical value of each of the status inputs. An example of a data record in the on-board data log file 210 stored in the data storage device 202 is shown in TABLE 2.

**TABLE 2: Data Record in On-Board Data Log File**

| Symbol | Value | Description |
|---|---|---|
| T | Time | Date/time stamp |
| s | On/Off Status | Bit position in N-bit word |
| WH | Real Energy | Total real energy accumulated since last reset in Watt-hours |
| VH | Reactive Energy | Total reactive energy accumulated since last reset in Var-Hours |

The real energy is defined as the integral of real power with respect to time, beginning at an instant that the circuit monitor 150 is reset. The reactive energy is defined as the integral of reactive power with respect to time, beginning at an instant that the circuit monitor 150 is reset. In this example, the calendar date and time are encoded in a floating point value in the data log file. The integer part represents the number of whole days since a reference time, and the fractional part represents the fraction of a day starting from midnight.

In this example, the set of N status inputs or states of N status inputs indicating the operating mode identifier (Mode ID in TABLE 1) are mapped in the circuit monitor 150 onto bit positions in the N-bits of the register 206. N can either be 8 or 16 bits in this example, but larger or smaller registers and values can be used. The bits corresponding to unused status inputs will be zero. The status inputs are thus translated into a value of the N-bit word stored on the N-bit register 206. The N-bit word is incorporated in the on/off status data stored in the data log files 210.

The computer 140 reads the on-board data log file 210 stored in the data storage device 202 via the interface 204 and performs additional calculations from the recorded data to derive data pertaining to individual instances of the operating modes of the chiller 100. In this example, the variable, n, is an index representing successive records in the read data log file 210 beginning with n = 1. The data for the nth operating mode instance are computed from successive data records n and n+1 as shown in Table 3 by the computer 140 in this example.

**TABLE 3: Data Record in Operating Mode Instance**

| Symbol | Equation | Description |
|---|---|---|
| Mode ID (n) | = s(n) | Bits map to on/off status of individual compressors |
| tStart (n) | = T(n) | Date/time start of mode instance |
| Tdur(n) | = 24* (T(n+1)-T(n)) | Duration of mode instance in hours |
| avgWatt (n) | = [WH (n+1) - WH(n)]/TDur | Average real power during mode instance in Watts |
| avgVars (n) | = [VH (n+1) - VH(n)]/TDur | Average reactive power during mode instance in Vars |

In this data record shown in Table 3 above, the Mode ID symbol is the value of the N-bit status register 206 for the data record. The duration of the operating mode is determined by taking the difference between the time stamps of consecutive data records. The real energy consumed in the instance of the operating mode is the difference between the total energy accumulated at the end of the operating mode minus the total energy recorded at the beginning of the operating mode instance. The reactive energy is the difference between the reactive energy recorded at the end of the operating mode instance minus the reactive energy recorded at the beginning of the operating mode instance. The average real power for the operating mode instance is the total real energy divided by the elapsed time of the operating mode instance. The average reactive power of the operating mode instance is the total reactive energy for the operating mode instance divided by the elapsed time of the operating mode instance. In this example, the chiller 100 draws control power even when none of the compressors 112, 114, 116, and 118 are running. Because this equipment ensemble consumes power in the zero operating mode (Mode ID 0) in TABLE 1, the above data records are useful in the operating mode corresponding to Mode ID 0 as well.

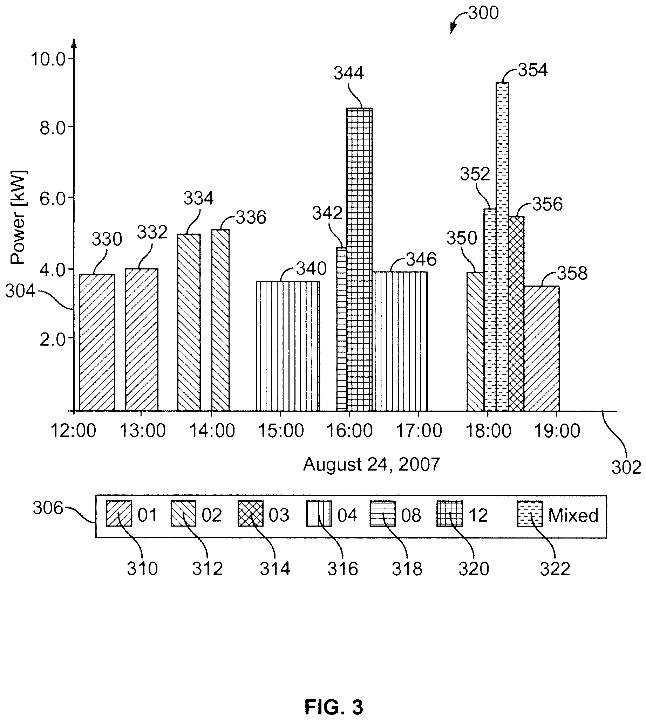

The computer 140 includes software that reads data in the data record 210 from the circuit monitor 150, and computes the data in TABLE 3 for display on a graphical display shown on the display device 160. The display device 160 can be any appropriate video or other display such as a cathode ray tube (CRT), a high-resolution liquid crystal display (LCD), a plasma display, a light emitting diode (LED), a DLP projection display, an electroluminescent (EL) panel, or any other type of display. FIG. 3 is a screen shot of a graphical display 300 shown on the display device 160. The graphical display 300 has a first, abscissa axis 302 that shows time increments. In this example, the abscissa axis 302 displays hour increments over a certain day, although other incremental time periods can be used. The graphical display 300 has a second, ordinate axis 304 that shows increments of power in kilowatts (kW). Each instance of an operating mode of the chiller 100 in FIG. 1 is represented as a multi-dimensional shape such as a rectangular bar 330. The bar 330 begins at the time increment where the start time of the operating mode instance occurs such as when one of the compressors 112, 114, 116, and 118 changes its on or off state. One dimension of the bar 330, such as its width, represents the duration of the operating mode instance while a second dimension of the bar 300, such as its height, represents a characteristic of the power consumed such as the average power for the operating mode instance in this example. Because each operating mode instance is unique and distinct from every other operating mode instance, consecutive records of the data log files 210 at each unique successive time ensure that the bars such as the bar 330 and another bar 332 do not overlap on the graph 300. The lack of overlap results from assigning distinct operating modes for the chiller 100 such that every possible on and off state combination of the compressors 112, 114, 116, and 118 is monitored and assigned a multi-dimensional shape with a unique pattern as will be explained below. Such a manner of display eliminates the confusion that can result from overlapping bars corresponding to individual compressors. Grouping all "on" electrical devices in one operating mode in a unique bar pattern keeps the graphic display 300 clean and easy to read.

The bars 330, 332, 334, and 336 each represent a specific operating mode of the chiller 100 and are assigned a unique color or pattern or shading to distinguish visually a bar such as a bar 330 from other bars such as the bar 334 representing a different operating mode. This pattern or color scheme enables a user to distinguish visually one operating mode from another and to make at-a-glance visual comparisons from the graphical display 300. The graphical display 300 includes a legend area 306 that includes pattern keys 310, 312, 314, 316, 318, and 320 that have patterns that correspond with selected operating modes and the corresponding operating mode identifiers. For example, the pattern key 310 represents the operating mode corresponding to Mode ID 1 in TABLE 1. It is to be understood that other identifying indicators such as different colors can be used to differentiate the different keys and bars representing different operating modes. The keys 312, 314 316, 318, and 320 represent Mode IDs 2, 3, 4, 8, and 12 respectively from TABLE 1. An additional pattern key 322 has a pattern indicating a mixed mode representing all of the other operating modes not represented by the keys 312, 314, 316, 318, and 320.

The graph 300 in FIG. 3 has various bars, such as bars 330, 332, 334 and 336 that show the first refrigerant circuit 104 in FIG. 1 in operation. The bar 330 shows an instance of the operating mode corresponding to Mode ID 1 in TABLE 1 in which only the compressor 112 is in the on-state. The bar 330 is positioned to show that the operating mode instance began shortly after 12:00 and continued for approximately half an hour. The bar 330 shows that the average power during the time of the operating mode instance is slightly less than 4.0 kW. The end of the operating mode instance occurs when the compressor 112 is switched to the off-state. The compressor 112 is again switched to the on-state to activate another operating mode instance for the operating mode corresponding to Mode ID 1 in TABLE 1 as shown by the bar 332 that begins at 12:45 and continues until about 13:15 with an average power of 4 kW as reflected the graph 300.

The bar 334 shows that the compressor 114 has been switched from the off-state to the on-state at about 13:30 and runs for about 20 minutes at an average power of approximately 5 kW. The compressor 114 is in the on-state for the operating mode corresponding to Mode ID 2 in TABLE 1. The bar 336 shows the compressor 114 being switched to the on-state at 14:00 and running for 15 minutes at an average power of slightly more than 5 kW again in the operating mode corresponding to Mode ID 2 in TABLE 1. In this example, a user can determine the relatively higher average power and shorter run times for operating mode corresponding to Mode ID 2 as shown by the bars 334 and 336 compared with operating mode corresponding to Mode ID 1 as shown by the bars 330 and 332. The bars 330 and 332 compared with bars 334 and 336 graphically show a difference in system performance between the compressors 112 and 114.

Similarly, the bars 340, 342, 344, and 346 show the second refrigerant circuit 106 in FIG. 1 in operation. The bar 340 shows an instance of the operating mode corresponding to Mode ID 4 in TABLE 1 in which only the compressor 116 is in the on-state. The bar 340 is positioned to show that the operating mode instance began shortly after 14:40 and continues to run until 15:30. The bar 340 shows that the average power during the time of the operating mode instance corresponding to Mode ID 4 is 3.8 kW.

The bar 342 shows the operating mode corresponding to Mode ID 8 in FIG. 1 in which the compressor 118 is placed in the on-state at 15:50 and runs about 10 minutes. At 16:00, the compressor 116 is also switched to the on-state therefore switching the operating mode to the operating mode corresponding to Mode ID 12 in TABLE 1. As shown by the bar 344, the compressor 116 and the compressor 118 run together at an average power of 8.5 kW until 16:20 where the compressor 118 is switched to the off-state therefore ending the operating mode corresponding to Mode ID 12. The compressor 116 remains running and therefore the operating mode is changed to the operating mode corresponding to Mode ID 4 as shown by the bar 346. The bar 346 shows that the compressor 116 is in the on-state (the only compressor in an on-state) in the operating mode corresponding to Mode ID 4 (Table 1) and consumes an average power of 4 kW until the compressor 116 is switched to the off-state ending the operating mode instance at 17:10.

Other bars on the graph 300 show other operating modes that represent combinations of compressors 112, 114, 116, and 118 being in different on/off states from both refrigerant circuits 104 and 106 described in TABLE 1. For example, a bar 350 shows the operating mode corresponding to Mode ID 2 (Table 1) where the compressor 114 is switched to the on-state at 17:45 and runs until 18:00 at an average power of 4 kW. At 18:00 another compressor such as the compressor 116 is switched to the on-state as shown by bar 352. The bar 352 is shaded according to the mixed mode key 322. In this example, the mixed mode key 322 represents operating modes such as the operating modes corresponding to Mode IDs 5-7, 9-11, and 13-15 in TABLE 1, in which compressors from both refrigerant circuits 104 and 106 in FIG. 1 are running. Operating in such operating modes in this example is less common than the operating modes corresponding to Mode IDs 1, 2, 3, 4, 8, and 12 that are assigned individual pattern keys 310, 312, 314, 316, 318 and 320 respectively. Of course it is understood that all operating modes can have their own unique pattern key in the graph 300. In this example, the bar 352 shows that the mixed operating mode lasts for 10 minutes at an average power of about 6 kW. The next bar 354 shows another mixed operating mode that begins when another compressor is switched to the on-state resulting in an increase in power consumption. As shown by the bar 356, the average power is now 9.5 kW. The bars 352 and 354 indicate that compressors of both refrigerant circuits 104 and 106 are in the on-state.

At 18:20, the chiller 100 enters the operating mode corresponding to Mode ID 3 in TABLE 1 as indicated by a bar 356. In this instance of the operating mode corresponding to Mode ID 3, the compressors 112 and 114 are in the on-state and operate together for about 15 minutes at an average power of 5.8 kW. The compressor 116 is shut off (i.e., switched to the off-state) at 18:35, resulting in a transition to the operating mode corresponding to Mode ID 1 in TABLE 1. As shown by the bar 358, the instance of the operating mode corresponding to Mode ID 1 lasts until 19:00 at an average power of about 3.8 kW.

Although bars are used in this example, it is to be understood that any multi-dimensional shape can be used where one or more of the dimensions can be used to represent time and power increments. For example, another measurement or electrical characteristic can be displayed in a three-dimensional shape. Further, although average power is shown in the above examples, it is to be understood that other power characteristics such as peak current, average current, total power, total energy, average energy, total reactive power, average reactive power, total reactive energy, or average reactive energy can also be displayed on the ordinate axis 304 in a graphical display similar to the graph 300 in FIG. 3. Also, the examples above relate to electrical equipment of devices that consume power. The examples above can likewise be applied to power-producing devices such as generators that have on and off states for production of power.

It is to be understood that the auxiliary input/output is used to determine the logical states reflecting the on or off-state of the compressors 112, 114, 116, and 118. However, the change in the on or off-state of the compressors 112, 114, 116, and 118 can also be determined by other methods such as detecting the vibration of an operating compressor or by examining changes in the power consumed by the ensemble of equipment in the chiller 100. Also, an alternative to using a single monitor such as the circuit monitor 150 would be to have individual monitors on each compressor 112, 114, 116, and 118 in FIG. 1. In such an alternative each monitor records the power and time data for the associated compressor. The computer 140 would read four (in this case) data files and aggregate them to produce the data shown in FIG. 3.

Although an example of the computer 140 and the controller 200 is described and illustrated herein in connection with FIGs. 1-2, each of these components can be implemented on any suitable computer system or computing device. It is to be understood that the example computer and controller in FIGs. 1-2 are for exemplary purposes, as many variations of the specific hardware and software used are possible, as will be appreciated by those skilled in the relevant art(s).

Furthermore, each of the devices can be conveniently implemented using one or more general purpose computer systems, microprocessors, digital signal processors, microcontrollers, application specific integrated circuits (ASIC), programmable logic devices (PLD), field programmable logic devices (FPLD), field programmable gate arrays (FPGA), and the like, programmed according to the teachings as described and illustrated herein, as will be appreciated by those skilled in the computer, software, and networking arts.

In addition, two or more computing systems or devices can be substituted for any one of the computer 140 or the controller 200 in FIGs. 1-2. Accordingly, principles and advantages of distributed processing, such as redundancy, replication, and the like, also can be implemented, as desired, to increase the robustness and performance of the computer 140 or the controller 200 in FIGs. 1-2. The computer 140 or the controller 200 in FIGs. 1-2 can also be implemented on a computer system or systems that extend(s) across any network environment using any suitable interface mechanisms and communications technologies including, for example telecommunications in any suitable form (e.g., voice, modem, and the like), Public Switched Telephone Network (PSTNs), Packet Data Networks (PDNs), the Internet, intranets, a combination thereof, and the like.

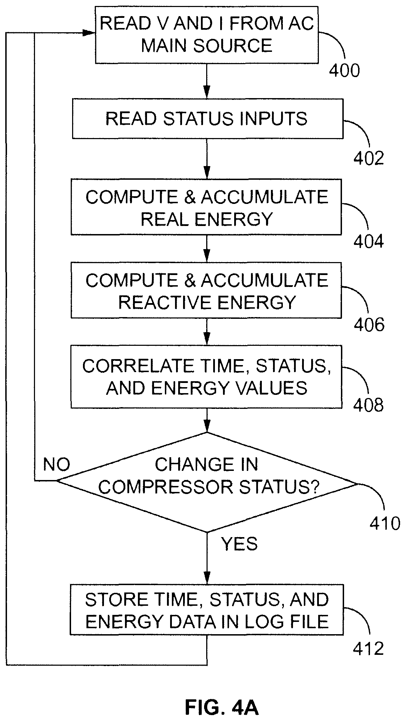

The operation of the example process to handle graphically display of power consumption data shown in FIGs. 1-2, which can be run on the computer 140 or the controller 200, will now be described with reference to FIGs. 1-2 in conjunction with a flow diagram shown in FIGs. 4A-4B. The flow diagrams in FIGs. 4A-4B are representative of example machine-readable instructions for implementing the processes described above to graphically display power data of an equipment ensemble such as the chiller 100 in FIG. 1. In this example, the machine-readable instructions comprise an algorithm for execution by: (a) a processor, (b) a controller, and/or (c) one or more other suitable processing device(s). The algorithm can be embodied in software stored on tangible media such as, for example, a flash memory, a CD-ROM, a floppy disk, a hard drive, a digital video (versatile) disk (DVD), or other memory devices, but persons of ordinary skill in the art will readily appreciate that the entire algorithm and/or parts thereof can alternatively be executed by a device other than a processor and/or embodied in firmware or dedicated hardware in a well-known manner (e.g., it can be implemented by an application specific integrated circuit (ASIC), a programmable logic device (PLD), a field programmable logic device (FPLD), a field programmable gate array (FPGA), discrete logic, etc.). For example, any or all of the components of the computer 140 or the controller 200 in FIGs. 1-2 can be implemented by software, hardware, and/or firmware. Also, some or all of the machine-readable instructions represented by the flowcharts of FIGs. 4A-4B can be implemented manually. Further, although the example algorithm is described with reference to the flowchart illustrated in FIGs. 4A-4B, persons of ordinary skill in the art will readily appreciate that many other methods of implementing the example machine-readable instructions can alternatively be used. For example, the order of execution of the blocks can be changed, and/or some of the blocks described can be changed, eliminated, or combined.

FIG. 4A is a flowchart of the monitoring and data collection process performed by the monitoring system 102 in FIG. 1. The circuit monitor 150 reads the voltage and current levels from the AC main source 130 (400). The circuit monitor 150 also determines the status or current operating mode based on the inputs from the auxiliary contacts 142, 144, 146, and 148 to the auxiliary input/output interface 154 (402). The voltage and current measurements are used to compute and determine real energy by the controller 200 (404). The voltage and current measurements are used to compute and determine reactive energy by the controller 200 (406). The circuit monitor 150 correlates the status derived from the auxiliary input/output interface 154 with the energy values computed such as real energy (404) and reactive energy (406) and the times (408). The controller 200 determines whether there has been a change in compressor status from the measured energy (410). If there is no change in energy indicating no status change, the process loops and continues to read voltage and current levels (400). If there is a change in energy indicating a change in the status, the computed energy and corresponding time and the associated status are stored in a data record of the data log file 210 (412). The process then loops and continues to read voltage and current levels (400)

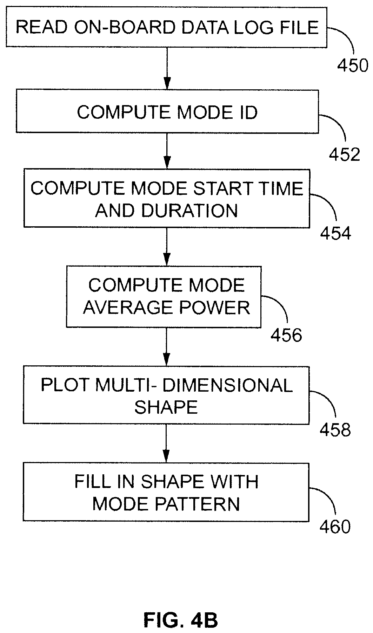

FIG. 4B is a flow diagram of the process performed by the monitoring and display system 102 to display the collected data. The data record 210 is loaded on the computer 140 for further analysis via the interface 204 (450). The computer 140 computes the mode ID from status data in the loaded data record 210 (452). The computer 140 computes the mode start time and duration from the data in the loaded data record 210 (454). The computer 140 computes a characteristic of power such as the average power of the mode from the data (456). The computer 140 then plots the multi-dimensional shape such as one of the bars in FIG. 3 based on the computed characteristic of power and data such as start time, duration, and average power (458). The graphical display 300 is refreshed and a new bar is rendered on the chart as shown in FIG. 3. The computer 140 also determines the operating mode identifier from the data record and selects the appropriate pattern or color or shading for the bar to match the operating mode to fill in the bar (460).

While the present invention has been described with reference to one or more particular embodiments, those skilled in the art will recognize that many changes can be made thereto without departing from the scope of the claimed invention, which is set forth in the following claims.

## Claims

1. A method of displaying a characteristic of power associated with a first piece of electrical equipment (112, 114, 116, 118) that has an on-state and an off-state, the method comprising:
receiving, at a circuit monitor (150), a measurement of a current consumed or produced by the first piece of electrical equipment in the on-state, the circuit monitor configured to monitor the state of a discrete input for the first piece of electrical equipment;
storing, on a memory device (202), first data derived from the measured current and associated times when the first piece of electrical equipment is in the on-state, the on-state being indicated by the discrete input;
calculating a characteristic of power as a function of the first data;
graphically displaying on a video display (160) a graphical representation (300) of the characteristic of power as a multi-dimensional shape on a graph having a first axis (302) with time increments and a second axis (304) with increments representing units of the characteristic of power, the multi-dimensional shape including a first dimension along the first axis representing a duration of the on-state and a second dimension along the second axis representing the characteristic of power consumed or produced by at least the first piece of electrical equipment during the times associated with the duration of the on-state.

2. The method of claim 1, wherein the first axis is the abscissa axis and the second axis is the ordinate axis.

3. The method of claim 1, wherein the multi-dimensional shape is a bar having a width and a length, the first dimension is the width of the bar and the second dimension is the length of the bar.

4. The method of claim 1, further comprising:
measuring the current consumed or produced by a second piece of equipment in the on-state;
storing, on the memory device, second data derived from the measured current and associated time periods when the second piece of equipment is in the on-state;
calculating a characteristic of power as a function of the second data;
graphically displaying on the video display a graphical representation of the characteristic of power and time periods measured from the second piece of equipment as part of the multi-dimensional shape on the graph.

5. The method of claim 4, wherein the first and second pieces of electrical equipment are part of an ensemble of equipment, the ensemble of equipment having a plurality of distinct operating modes, each of the operating modes reflecting a different combination of on and off-states of at least the first and second pieces of electrical equipment.

6. The method of claim 5, further comprising graphically displaying a second multi-dimensional shape including a first dimension representing a second duration of the on-state of at least one of the first or second piece of electrical equipment and a second dimension representing a characteristic of power consumed or produced by at least one of the first or second piece of electrical equipment during the second duration of the on-state.

7. The method of claim 6, further comprising filling the multi-dimensional shape with a first pattern or color associated with at least one of the operating modes and filling in the second multi-dimensional shape with a second pattern or color associated with at least another one of the operating modes, the second pattern or color being different from the first pattern or color, the multi-dimensional shape and the second multi-dimensional shape do not overlap each other on the graph.

8. The method of claim 1, wherein the piece of equipment includes one or more compressors or one or more generators or any combination thereof.

9. The method of claim 1 wherein the characteristic of power consumed or produced is at least one of peak current, average current, average power, average energy, reactive power, average reactive power, reactive energy or average reactive energy.

10. A system for displaying a characteristic of power consumed or produced by an ensemble of electrical equipment (112, 114, 116, 118) that includes a first electrical device having an on state and an off state and a second electrical device having an on state and an off state, the ensemble of electrical equipment having a plurality of distinct operating modes that are a function of the on and off states of at least the first and second electrical devices, the system comprising:
a circuit monitor (150) comprising a data interface (152) for coupling to the first and second electrical devices to measure current consumed or produced by the first and second electrical devices, the circuit monitor being configured to monitor a state of a discrete input for the first electrical device and a state of a discrete input for the second electrical device, the on state of the first electrical device being indicated by the discrete input for the first electrical device and the on state of the second electrical device being indicated by the discrete input for the second electrical device;
a storage device (202) coupled to the data interface to store (a) data derived from the current measured from the first and second electrical devices and (b) associated times;
a controller coupled to the storage device, the controller calculating a characteristic of power from the data and the associated times; and
a display (160) that displays the data as a multi-dimensional shape on a graph (300) having a first axis (302) with time increments and a second axis (304) with increments representing units of the characteristic of power, the multi-dimensional shape including a first dimension along the first axis representing the duration of a first operating mode of the plurality of distinct operating modes and a second dimension along the second axis representing the characteristic of the power consumed or produced by those of the electrical devices that are in the on state during the first operating mode.

11. The system of claim 10, wherein the first axis is the abscissa axis and the second axis is the ordinate axis.

12. The system of claim 10, wherein the multi-dimensional shape is a bar having a width and a length, the first dimension is a width of the bar and the second dimension is a length of the bar, the multi-dimensional shape includes a first pattern or color associated with the first operating modes.

13. The system of claim 12, wherein the display displays a second multi-dimensional shape including a first dimension representing a second duration of a second operating mode of the distinct operating modes of operation and a second dimension representing a characteristic of the power consumed or produced by those of the electrical devices that are in the on state during the second operating mode, the second multi-dimensional shape includes a second pattern or color associated with the second operating mode, the second pattern or color being different from the first pattern or color associated with the first operating mode, the first and second multi-dimensional shapes do not overlap each other on the graph.

14. The system of claim 10, wherein the ensemble of equipment includes one or more compressors, one or more generators, or any combination thereof.

15. The system of claim 10 wherein the characteristic of power consumed or produced is at least one of peak current, average current, average power, average energy, reactive power, average reactive power, reactive energy or average reactive energy.

## Patentansprüche

1. Verfahren zum Anzeigen einer Stromeigenschaft, die mit einem ersten Teil einer elektrischen Ausstattung (112, 114, 116, 118), der einen Ein-Zustand und einen Aus-Zustand aufweist, assoziiert ist, wobei das Verfahren umfasst:
Empfangen, an einem Schaltungsmonitor (150), einer Messung eines durch den ersten Teil der elektrischen Ausstattung in dem Ein-Zustand verbrauchten oder erzeugten Stroms, wobei der Schaltungsmonitor konfiguriert ist zum Überwachen des Zustands einer diskreten Eingabe für den ersten Teil der elektrischen Ausstattung,
Speichern, in einer Speichervorrichtung (202), von ersten Daten, die aus dem gemessenen Strom abgeleitet werden, und assoziierten Zeiten, wenn sich der erste Teil der elektrischen Ausstattung in dem Ein-Zustand befindet, wobei der Ein-Zustand durch die diskrete Eingabe angegeben wird,
Berechnen einer Stromeigenschaft als einer Funktion der ersten Daten,
grafisches Anzeigen, auf einer Videoanzeige (160), einer grafischen Wiedergabe (300) der Stromeigenschaften als einer mehrdimensionalen Form in einem Diagramm, das eine erste Achse (302) mit Zeitinkrementen und eine zweite Achse (304) mit Inkrementen, die Einheiten der Stromeigenschaft wiedergeben, aufweist, wobei die mehrdimensionale Form eine erste Dimension entlang der ersten Achse, die eine Dauer des Ein-Zustands wiedergibt, und eine zweite Dimension entlang der zweiten Achse, die die Stromeigenschaft des durch wenigstens den ersten Teil der elektrischen Ausstattung während der mit der Dauer des Ein-Zustands assoziierten Zeiten verbrauchten oder erzeugten Stroms wiedergibt, aufweist.

2. Verfahren nach Anspruch 1, wobei die erste Achse die Abszissenachse ist und die zweite Achse die Ordinatenachse ist.

3. Verfahren nach Anspruch 1, wobei die mehrdimensionale Form ein Balken mit einer Breite und einer Länge ist, wobei die erste Dimension die Breite des Balkens ist und die zweite Dimension die Länge des Balkens ist.

4. Verfahren nach Anspruch 1, das weiterhin umfasst:
Messen des durch einen zweiten Teil der Ausstattung in dem Ein-Zustand verbrauchten oder erzeugten Stroms,
Speichern, in der Speichereinrichtung, von zweiten Daten, die aus dem gemessenen Strom und assoziierten Zeitperioden, wenn sich der zweite Teil der Ausstattung in dem Ein-Zustand befindet, abgeleitet werden,
Berechnen einer Stromeigenschaft als einer Funktion der zweiten Daten,
grafisches Anzeigen, an der Videoanzeige, einer grafischen Wiedergabe der Stromeigenschaften und Zeitperioden, die von dem zweiten Teil der Ausstattung gemessen werden, als einen Teil der mehrdimensionalen Form in dem Diagramm.

5. Verfahren nach Anspruch 4, wobei die ersten und zweiten Teile der elektrischen Ausstattung Teil einer Ausstattungsanordnung sind, wobei die Ausstattungsanordnung eine Vielzahl von verschiedenen Betriebsmodi aufweist, wobei jeder der Betriebsmodi eine andere Kombination von Ein- und Aus-Zuständen wenigstens der ersten und zweiten Teile der elektrischen Ausstattung wiedergibt.

6. Verfahren nach Anspruch 5, das weiterhin das grafische Anzeigen einer zweiten mehrdimensionalen Form mit einer ersten Dimension, die eine zweite Dauer des Ein-Zustands wenigstens eines der ersten und zweiten Teile der elektrischen Ausstattung wiedergibt, und einer zweiten Dimension, die eine Eigenschaft des durch wenigstens einen der ersten und zweiten Teile der elektrischen Ausstattung während der zweiten Dauer des Ein-Zustands verbrauchten oder erzeugten Stroms wiedergibt, umfasst.

7. Verfahren nach Anspruch 6, das weiterhin das Füllen der mehrdimensionalen Form mit einem ersten Muster oder einer ersten Farbe, das bzw. die mit dem wenigstens einen der Betriebsmodi assoziiert ist, und das Füllen der zweiten mehrdimensionalen Form mit einem zweiten Muster oder einer zweiten Farbe, das bzw. die mit wenigstens einem anderen der Betriebsmodi gefüllt ist, umfasst, wobei das zweite Muster oder die zweite Farbe verschieden ist von dem ersten Muster oder der ersten Farbe und wobei die mehrdimensionale Form und die zweite mehrdimensionale Form einander in dem Diagramm nicht überlappen.

8. Verfahren nach Anspruch 1, wobei der Teil der Ausstattung einen oder mehrere Kompressoren oder einen oder mehrere Generatoren oder eine Kombination aus diesen umfasst.

9. Verfahren nach Anspruch 1, wobei die Eigenschaft des verbrauchten oder erzeugten Stroms ein Spitzenstrom, ein durchschnittlicher Strom, eine durchschnittliche Leistung, eine durchschnittliche Energie, eine reaktive Leistung, eine durchschnittliche reaktive Leistung, eine reaktive Energie oder eine durchschnittliche reaktive Energie ist.

10. System zum Anzeigen einer Eigenschaft eines Stroms, der durch eine Anordnung von elektrischen Ausstattungen (112, 114, 116, 118) verbraucht oder erzeugt wird, die eine erste elektrische Einrichtung mit einem Ein-Zustand und einem Aus-Zustand und eine zweite elektrische Einrichtung mit einem Ein-Zustand und einem Aus-Zustand enthält, wobei die Anordnung der elektrischen Ausstattungen eine Vielzahl von verschiedenen Betriebsmodi aufweist, die von den Ein- und Aus-Zuständen wenigstens der ersten und zweiten elektrischen Einrichtungen abhängig sind, wobei das System umfasst:
einen Schaltungsmonitor (150), der eine Datenschnittstelle (152) für eine Kopplung mit den ersten und zweiten elektrischen Einrichtungen umfasst, um den durch die ersten und zweiten elektrischen Einrichtungen verbrauchten oder erzeugten Strom zu messen, wobei der Schaltungsmonitor konfiguriert ist, um einen Zustand eines diskreten Eingangs für die erste elektrische Einrichtung und einen Zustand eines diskreten Eingangs für die zweite elektrische Einrichtung zu überwachen, wobei der Ein-Zustand der ersten elektrischen Einrichtung durch den diskreten Eingang für die erste elektrische Einrichtung angegeben wird und der Ein-Zustand der zweiten elektrischen Einrichtung durch den diskreten Eingang für die zweite elektrische Einrichtung angegeben wird,
eine Speichereinrichtung (202), die mit der Datenschnittstelle gekoppelt ist, um (a) Daten, die aus dem von den ersten und zweiten elektrischen Einrichtungen gemessenen Strom abgeleitet werden, und (b) assoziierte Zeiten zu speichern,
eine Steuereinrichtung, die mit der Speichereinrichtung gekoppelt ist, wobei die Steuereinrichtung eine Stromeigenschaft aus den Daten und den assoziierten Zeiten berechnet, und
eine Anzeige (160), die die Daten als eine mehrdimensionale Form in einem Diagramm (300) anzeigt, das eine erste Achse (302) mit Zeitinkrementen und eine zweite Achse (304) mit Inkrementen, die Einheiten der Stromeigenschaft wiedergeben, aufweist, wobei die mehrdimensionale Form eine erste Dimension entlang der ersten Achse, die die Dauer eines ersten Betriebsmodus aus der Vielzahl von verschiedenen Betriebsmodi wiedergibt, und eine zweite Dimension entlang der zweiten Achse, die die Eigenschaft des durch diejenigen der elektrischen Einrichtungen, die sich in dem Ein-Zustand während des ersten Betriebsmodus befinden, verbrauchten oder erzeugten Stroms wiedergibt, aufweist.

11. System nach Anspruch 10, wobei die erste Achse die Abszissenachse ist und die zweite Achse die Ordinatenachse ist.

12. System nach Anspruch 10, wobei die mehrdimensionale Form ein Balken mit einer Breite und einer Länge ist, wobei die erste Dimension eine Breite des Balkens ist und die zweite Dimension eine Länge des Balkens ist, wobei die mehrdimensionale Form ein erstes Muster oder eine erste Farbe enthält, das bzw. die mit den ersten Betriebsmodi assoziiert ist.

13. System nach Anspruch 12, wobei die Anzeige eine zweite mehrdimensionale Form anzeigt, die eine erste Dimension, die eine zweite Dauer eines zweiten Betriebsmodus der verschiedenen Betriebsmodi wiedergibt, und eine zweite Dimension, die eine Eigenschaft des durch diejenigen der elektrischen Einrichtungen, die sich in einem Ein-Zustand während des zweiten Betriebsmodus befinden, verbrauchten oder erzeugten Stroms wiedergibt, aufweist, wobei die zweite mehrdimensionale Form ein zweites Muster oder eine zweite Farbe aufweist, das bzw. die mit dem zweiten Betriebsmodus assoziiert ist, wobei das zweite Muster oder die zweite Farbe verschieden ist von dem ersten Muster oder der ersten Farbe, das bzw. die mit dem ersten Betriebsmodus assoziiert ist, wobei die ersten und zweiten mehrdimensionalen Formen einander nicht in dem Diagramm überlappen.

14. System nach Anspruch 10, wobei die Anordnung der Ausstattungen einen oder mehrere Kompressoren, einen oder mehrere Generatoren oder eine Kombination aus denselben umfasst.

15. System nach Anspruch 10, wobei die Eigenschaft des verbrauchten oder erzeugten Stroms ein Spitzenstrom, ein durchschnittlicher Strom, eine durchschnittliche Leistung, eine durchschnittliche Energie, eine reaktive Leistung, eine durchschnittliche reaktive Leistung, eine reaktive Energie oder eine durchschnittliche reaktive Energie ist.

## Revendications

1. Procédé permettant d'afficher une caractéristique de puissance associée à un premier élément d'équipement électrique (112, 114, 116, 118) présentant un état sous tension et un état hors tension, le procédé comprenant :
la réception, au niveau d'un moniteur de circuit (150), d'une mesure d'un courant consommé ou produit par le premier élément d'équipement électrique à l'état sous tension, le moniteur de circuit étant configuré pour surveiller l'état d'une entrée discrète relative au premier élément d'équipement électrique ;
l'enregistrement, sur un dispositif de mémoire (202), de premières données déduites du courant mesuré et de temps associés où le premier élément d'équipement électrique est à l'état sous tension, l'état sous tension étant indiqué par l'entrée discrète ;
le calcul d'une caractéristique de puissance comme fonction des premières données ;
l'affichage graphique, sur un écran vidéo (160), d'une représentation graphique (300) de la caractéristique de puissance sous forme multi-dimensionnelle sur un diagramme comportant un premier axe (302) sur lequel sont portés des incréments de temps et un second axe (304) sur lequel sont portés des incréments représentant des unités de la caractéristique de puissance, la forme multi-dimensionnelle incluant une première dimension le long du premier axe représentant une durée de l'état sous tension, et une seconde dimension le long du second axe représentant la caractéristique de puissance consommée ou produite par au moins le premier élément d'équipement électrique pendant les temps associés à la durée de l'état sous tension.

2. Procédé selon la revendication 1, dans lequel le premier axe est l'axe des abscisses et le second axe est l'axe des ordonnées.

3. Procédé selon la revendication 1, dans lequel la forme multi-dimensionnelle est une barre ayant une largeur et une longueur, la première dimension est la largeur de la barre et la seconde dimension est la longueur de la barre.

4. Procédé selon la revendication 1, comprenant en outre :
la mesure du courant consommé ou produit par un second élément d'équipement à l'état sous tension ;
l'enregistrement, sur le dispositif de mémoire, de secondes données déduites du courant mesuré et de périodes associées où le second élément d'équipement est à l'état sous tension ;
le calcul d'une caractéristique de puissance comme fonction des secondes données ;
l'affichage graphique, sur l'écran vidéo, d'une représentation graphique de la caractéristique de puissance et des périodes mesurées à partir du second élément d'équipement comme faisant partie de la forme multi-dimensionnelle sur le diagramme.

5. Procédé selon la revendication 4, dans lequel les premier et second éléments d'équipement électrique font partie d'un ensemble d'équipement, l'ensemble d'équipement ayant plusieurs modes de fonctionnement distincts, chacun des modes de fonctionnement reflétant une combinaison différente d'états sous tension et hors tension d'au moins les premier et second éléments d'équipement électrique.

6. Procédé selon la revendication 5, comprenant, en outre, l'affichage graphique d'une seconde forme multi-dimensionnelle incluant une première dimension représentant une seconde durée de l'état sous tension d'au moins un des premier ou second éléments d'équipement électrique, et une seconde dimension représentant une caractéristique de puissance consommée ou produite par au moins un des premier ou second éléments d'équipement électrique pendant la seconde durée de l'état sous tension.

7. Procédé selon la revendication 6, comprenant en outre le remplissage de la forme multi-dimensionnelle par un premier motif ou une première couleur associé(e) à au moins un des modes de fonctionnement et le remplissage de la seconde forme multi-dimensionnelle par un second motif ou une seconde couleur associé(e) à au moins un autre des modes de fonctionnement, le second motif ou la seconde couleur étant différent(e) du premier motif ou de la première couleur, la forme multi-dimensionnelle et la seconde forme multi-dimensionnelle ne se chevauchant pas sur le diagramme.

8. Procédé selon la revendication 1, dans lequel l'élément d'équipement inclut un ou des compresseur(s) ou un ou des générateur(s), ou une combinaison quelconque de ceux-ci.

9. Procédé selon la revendication 1, dans lequel la caractéristique de puissance consommée ou produite est au moins un courant de crête et/ou un courant moyen et/ou une puissance moyenne et/ou une énergie moyenne et/ou une puissance réactive et/ou une puissance réactive moyenne et/ou une énergie réactive et/ou une énergie réactive moyenne.

10. Système d'affichage d'une caractéristique de puissance consommée ou produite par un ensemble d'équipement électrique (112, 114, 116, 118) qui inclut un premier dispositif électrique présentant un état sous tension et un état hors tension et un second dispositif électrique présentant un état sous tension et un état hors tension, l'ensemble d'équipement électrique ayant plusieurs modes de fonctionnement distincts qui sont fonction des états sous tension et hors tension d'au moins les premier et second dispositifs électriques, le système comprenant :
un moniteur de circuit (150) comprenant une interface de données (152) destinée à être couplée aux premier et second dispositifs électriques pour mesurer un courant consommé ou produit par les premier et second dispositifs électriques, le moniteur de circuit étant configuré pour surveiller un état d'une entrée discrète relative au premier dispositif électrique et un état d'une entrée discrète relative au second dispositif électrique, l'état sous tension du premier dispositif électrique étant indiqué par l'entrée discrète relative au premier dispositif électrique et l'état sous tension du second dispositif électrique étant indiqué par l'entrée discrète relative au second dispositif électrique ;
un dispositif d'enregistrement (202) couplé à l'interface de données pour enregistrer (a) des données déduites du courant mesuré à partir des premier et second dispositifs électriques et (b) des temps associés ;
un contrôleur couplé au dispositif d'enregistrement, le contrôleur calculant une caractéristique de puissance à partir des données et des temps associés ; et
un écran (160) qui affiche les données sous forme multi-dimensionnelle sur un diagramme (300) comportant un premier axe (302) sur lequel sont portés des incréments de temps et un second axe (304) sur lequel sont portés des incréments représentant des unités de la caractéristique de puissance, la forme multi-dimensionnelle incluant une première dimension le long du premier axe représentant la durée d'un premier mode de fonctionnement de la pluralité de modes de fonctionnement distincts, et une seconde dimension le long du second axe représentant la caractéristique de la puissance consommée ou produite par ceux des dispositifs électriques qui sont à l'état sous tension pendant le premier mode de fonctionnement.

11. Système selon la revendication 10, dans lequel le premier axe est l'axe des abscisses et le second axe est l'axe des ordonnées.

12. Système selon la revendication 10, dans lequel la forme multi-dimensionnelle est une barre ayant une largeur et une longueur, la première dimension est une largeur de la barre et la seconde dimension est une longueur de la barre, la forme multi-dimensionnelle inclut un premier motif ou une première couleur associé(e) au premier mode de fonctionnement.

13. Système selon la revendication 12, dans lequel l'écran affiche une seconde forme multi-dimensionnelle incluant une première dimension représentant une seconde durée d'un second mode de fonctionnement des modes de fonctionnement distincts, et une seconde dimension représentant une caractéristique de la puissance consommée ou produite par ceux des dispositifs électriques qui sont à l'état sous tension pendant le second mode de fonctionnement, la seconde forme multi-dimensionnelle inclut un second motif ou une seconde couleur associé(e) au second mode de fonctionnement, le second motif ou la seconde couleur étant différent(e) du premier motif ou de la première couleur associé(e) au premier mode de fonctionnement, les première et seconde formes multi-dimensionnelles ne se chevauchant pas sur le diagramme.

14. Système selon la revendication 10, dans lequel l'ensemble d'équipement inclut un ou des compresseur(s), un ou des générateur(s) ou une combinaison quelconque de ceux-ci.

15. Système selon la revendication 10, dans lequel la caractéristique de puissance consommée ou produite est au moins un courant de crête et/ou un courant moyen et/ou une puissance moyenne et/ou une énergie moyenne et/ou une puissance réactive et/ou une puissance réactive moyenne et/ou une énergie réactive et/ou une énergie réactive moyenne.
